(19) Europäisches Patentamt / European Patent Office / Office européen des brevets

(11) **EP 4 723 206 A1**

(12) **EUROPEAN PATENT APPLICATION**
published in accordance with Art. 153(4) EPC

(43) Date of publication:
**08.04.2026 Bulletin 2026/15**

(21) Application number: **24815336.3**

(22) Date of filing: **22.05.2024**

(51) International Patent Classification (IPC):
**H01M 4/139** *(2010.01)*  **H01M 4/13** *(2010.01)*
**H01M 4/36** *(2006.01)*

(52) Cooperative Patent Classification (CPC):
Y02E 60/10

(86) International application number:
**PCT/JP2024/018888**

(87) International publication number:
**WO 2024/247852 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **31.05.2023  JP 2023090455**

(71) Applicant: **FUJIFILM Corporation
Tokyo 106-8620 (JP)**

(72) Inventors:
• **MIZOGUCHI, Takao**
  **Minamiashigara-shi, Kanagawa 250-0193 (JP)**
• **ISOJIMA, Hiroshi**
  **Minamiashigara-shi, Kanagawa 250-0193 (JP)**

(74) Representative: **HGF
HGF Limited
4th Floor, 1 City Square
Leeds LS1 2ES (GB)**

(54) **SLURRY FOR FORMING POSITIVE ELECTRODE OF NON-AQUEOUS ELECTROLYTE SECONDARY BATTERY, POSITIVE ELECTRODE SHEET, AND NON-AQUEOUS ELECTROLYTE SECONDARY BATTERY**

(57)     Provided are a slurry for forming a positive electrode, containing a positive electrode active material, an electrolyte, and a dispersion medium, in which the positive electrode active material includes a large particle group A having a particle diameter of 5.0 μm or more and a small particle group B having a particle diameter of less than 5.0 μm, in a number-based particle size distribution of the positive electrode active material, in a case where a total frequency is set to 100%, a frequency of the large particle group A is 60% or more and a frequency of the small particle group B is 40% or less, and a liquid absorption amount ηB (g/100 g) of the dispersion medium per 100 g of the small particle group B satisfies an expression B1: $15 \leq \eta B \leq 30$; a positive electrode sheet including a positive electrode active material layer formed of the slurry for forming a positive electrode; and a non-aqueous electrolytic solution secondary battery incorporating the positive electrode sheet as a positive electrode.

FIG. 1

**Description**

**BACKGROUND OF THE INVENTION**

1. Field of the Invention

The present invention relates to a slurry for forming a positive electrode of a non-aqueous electrolytic solution secondary battery, a positive electrode sheet, and a non-aqueous electrolytic solution secondary battery.

2. Description of the Related Art

A non-aqueous electrolytic solution secondary battery typified by a lithium ion secondary battery has high energy density and is excellent in storage performance, low-temperature operability, and the like, and thus is widely used for portable electronic apparatuses such as a mobile phone and a notebook computer. In addition, the battery has been scaled up and used in transportation equipment such as automobiles, and the use of the battery as a storage device for nighttime power, power generation by natural energy, and the like has also been promoted.

A technique for increasing a capacity of the non-aqueous electrolytic solution secondary battery has been studied. For example, JP2017-147222A discloses a technique for causing an electrode active material layer to function as a secondary battery in a state of a slurry containing a high content of an active material. Specifically, JP2017-147222A discloses an electrochemical cell including:

a positive electrode consisting of a non-bonded body which contains a first active material and an electrolytic solution in a first non-aqueous liquid electrolyte;
a negative electrode consisting of a non-bonded body which contains a second active material and an electrolytic solution in a second non-aqueous liquid electrolyte; and
an ion-permeable membrane disposed between the positive electrode and the negative electrode,
in which the positive electrode and the negative electrode each have a thickness of approximately 200 $\mu$m to approximately 3,000 $\mu$m.

According to the technique disclosed in JP2017-147222A, since an electrode active material layer (a positive electrode active material layer and a negative electrode active material layer) contains an electrolyte and is in a slurry-like and non-bonded state, as in the positive electrode and the negative electrode, the electrode active material layer can be formed into a thick film while maintaining flexibility of the electrode active material layer, a binder which bonds solid particles is not required, and the charge capacity and the entire energy density can be significantly increased while maintaining the flexibility of the battery. The non-aqueous electrolytic solution secondary battery in which the electrode active material layer is formed in a slurry state containing an electrolytic solution (electrolyte), as disclosed in JP2017-147222A, may be referred to as a semi-solid state secondary battery in the following description.

Regarding the improvement of the performance of the non-aqueous electrolytic solution secondary battery, studies have been made focusing on the positive electrode active material layer.

For example, JP2015-230748A discloses a method for manufacturing an electrode for a lithium ion secondary battery, the method including:

preparing first composite particles containing a first active material and a first binder and second composite particles containing a second active material and a second binder, the second composite particles having higher fluidity than the first composite particles;
setting a band-shaped collector portion at at least one end part of a long collector along a longitudinal direction of the collector, and supplying the first composite particles to a first portion which is a band-shaped region adjacent to the collector portion;
supplying the second composite particles to a second portion which is a region on a width direction center side orthogonal to the longitudinal direction of the collector with respect to the first portion; and
rolling the first and second composite particles supplied onto the collector to form an active material layer,
in which, in Examples, a positive electrode sheet having a positive electrode active material layer, which is formed by the manufacturing method, is evaluated.
According to the technique disclosed in JP2015-230748A, it is possible to manufacture an electrode while suppressing peeling of the active material layer or slippage of the active material layer.

WO2018/155314A discloses a non-aqueous electrolyte storage element including:

a conductive substrate; and

a positive electrode having a positive electrode mixture layer, which is laminated on the substrate,

in which the substrate is formed of an aluminum alloy in which a content proportion of elements other than aluminum is 1% by mass or more,

the positive electrode mixture layer contains, as a positive electrode active material, particles A and particles B, which have different particle diameters,

a particle diameter ratio (A/B) of the particle diameter of the particles A to the particle diameter of the particles B is 3 or more, and

a tensile breaking strength of the substrate is 250 MPa or more.

According to the technique disclosed in WO2018/155314A, it is possible to suppress an increase in resistance due to repeated charge and discharge.

JP2023-34700A discloses a positive electrode active material containing:

first lithium composite oxide particles having a layered structure; and

second lithium composite oxide particles having a layered structure,

in which an average particle diameter (D50) of the first lithium composite oxide particles is 3.0 $\mu$m to 6.0 $\mu$m,

a dibutyl phthalate oil absorption amount of the first lithium composite oxide particles is 15 mL/100 g to 27 mL/100 g,

an average particle diameter (D50) of the second lithium composite oxide particles is 10.0 $\mu$m to 22.0 $\mu$m, and

a dibutyl phthalate oil absorption amount of the second lithium composite oxide particles is 14 mL/100 g to 22 mL/100 g.

According to the technique disclosed in JP2023-34700A, it is possible to increase a capacity of a non-aqueous electrolyte secondary battery and to impart capacity reduction resistance in a case of repeated charge and discharge.

In addition, JP2019-29212A discloses a lithium ion secondary battery including at least:

a positive electrode;

a negative electrode; and

an electrolyte,

in which the positive electrode contains at least a first positive electrode active material and a second positive electrode active material,

the first positive electrode active material is represented by a formula (I): $LiNi_aCo_bMn_cO_2$ ... (I),

the second positive electrode active material is represented by a formula (II): $LiNi_dCo_eMn_fO_2$ ... (II),

in the formulae (I) and (II), a, b, c, d, e, and f satisfy

$$a > d,$$

$$0.4 \leq a \leq 0.6, \ 0.2 \leq b \leq 0.5, \ 0.1 \leq c \leq 0.2, \ a + b + c = 1,$$

$$0.2 \leq d \leq 0.5, \ 0.1 \leq e \leq 0.2, \ 0.4 \leq f \leq 0.6, \ d + e + f = 1,$$

the electrolyte contains an electrolytic solution,

the first positive electrode active material has a first oil absorption amount,

the second positive electrode active material has a second oil absorption amount, and

the second oil absorption amount is larger than the first oil absorption amount.

According to the technique disclosed in JP2019-29212A, it is possible to improve ultra-low temperature output.

## SUMMARY OF THE INVENTION

In recent years, with the expansion of the application of the non-aqueous electrolytic solution secondary battery, the non-aqueous electrolytic solution secondary battery is required to have a high energy density (high capacity). For example, the non-aqueous electrolytic solution secondary battery is used as a power supply for an electric vehicle (EV) and a drone, and it is important to increase the capacity of the non-aqueous electrolytic solution secondary battery in order to improve a traveling range of the EV vehicle or to improve a flight time of the drone.

In order to increase the capacity (energy density) of the semi-solid state secondary battery, there is an attempt to increase a content of the positive electrode active material which stores ions in a slurry-like positive electrode active material layer. However, in the positive electrode active material layer of the semi-solid secondary battery, since a binder is not used, in a case where a slurry for forming a positive electrode is applied in a thick manner to form the positive electrode active material layer with a large thickness, there is a problem that, in the manufacturing process of the non-aqueous electrolytic solution secondary battery, a portion of an end part of the formed positive electrode active material layer collapses, and thus it is difficult to form the positive electrode active material layer having a desired shape (for example, a rectangular cross section).

The present invention relates to a semi-solid state secondary battery, and an object thereof is to provide a slurry for forming a positive electrode, which can obtain a non-aqueous electrolytic solution secondary battery having excellent formability (shape stability) of a positive electrode active material layer and excellent battery performance. Another object of the present invention is to provide a positive electrode sheet including the positive electrode active material layer formed of the slurry for forming a positive electrode, and a non-aqueous electrolytic solution secondary battery in which the positive electrode sheet is incorporated into a positive electrode.

As a result of intensive studies in view of the above-described objects, the present inventors have found that, in a case where a positive electrode active material having a specific particle size distribution is used as a positive electrode active material contained in a slurry for forming a positive electrode, which is used for forming a positive electrode active material layer of a semi-solid state secondary battery, and a liquid absorption amount of the positive electrode active material on a specific small particle side is increased to a specific range, the collapse of the obtained positive electrode active material layer is suppressed even in a case where the positive electrode active material layer is formed to have a large thickness, and the positive electrode active material layer having a desired shape can be efficiently formed, so that the capacity of the obtained non-aqueous electrolytic solution secondary battery can be achieved at a higher level. The present invention has been completed by further repeating studies on the basis of the above-described finding.

The above-described objects of the present invention have been achieved by the following means.

[1] A slurry for forming a positive electrode of a non-aqueous electrolytic solution secondary battery, comprising:

a positive electrode active material;
an electrolyte; and
a dispersion medium,
in which the positive electrode active material consists of a large particle group A having a particle diameter of 5.0 $\mu$m or more and a small particle group B having a particle diameter of less than 5.0 $\mu$m,
in a number-based particle size distribution of the positive electrode active material, in a case where a total frequency is set to 100%, a frequency of the large particle group A is 60% or more and a frequency of the small particle group B is 40% or less, and
a liquid absorption amount $\eta$B (g/100 g) of the dispersion medium per 100 g of the small particle group B satisfies the following expression B1,

$$\text{the expression B1: } 15 \leq \eta B \leq 30.$$

[2] The slurry for forming a positive electrode according to [1],
in which a liquid absorption amount $\eta$A (g/100 g) of the dispersion medium per 100 g of the large particle group A satisfies the following expression A1,

$$\text{the expression A1: } 2 \leq \eta A \leq 25.$$

[3] The slurry for forming a positive electrode according to [1] or [2],
in which the liquid absorption amount $\eta$A satisfies the following expression A2,

$$\text{the expression A2: } 2 \leq \eta A \leq 7.$$

[4] The slurry for forming a positive electrode according to any one of [1] to [3], in which the liquid absorption amount $\eta$B satisfies the following expression B2,

$$\text{the expression B2: } 18 \leq \eta B \leq 25.$$

[5] The slurry for forming a positive electrode according to any one of [1] to [4],
in which a maximum filling rate calculated from a volume-based cumulative particle size distribution of the positive electrode active material is 80% or more.

[6] A positive electrode sheet comprising:

a positive electrode active material layer formed of the slurry for forming a positive electrode according to any one of [1] to [5].

[7] A non-aqueous electrolytic solution secondary battery comprising:

the positive electrode sheet according to [6] as a positive electrode.

In the description of the present invention, a numerical range represented by using "to" means a range including numerical values described before and after "to" as a lower limit value and an upper limit value.

In the present invention, "non-aqueous electrolytic solution" means an electrolytic solution which does not substantially contain water. That is, the "non-aqueous electrolytic solution" may contain a trace of water within a range that does not impair the effects of the present invention. The concentration of water in the "non-aqueous electrolytic solution" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous electrolytic solution.

In the present invention, "non-aqueous solvent" also means a solvent which does not substantially contain water. That is, the "non-aqueous solvent" may contain a trace of water within a range that does not impair the effects of the present invention. The concentration of water in the "non-aqueous solvent" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous solvent.

The slurry for forming a positive electrode of the non-aqueous electrolytic solution secondary battery according to the aspect of the present invention can be used for forming a positive electrode active material layer which is less likely to collapse. With the positive electrode sheet according to the aspect of the present invention, it is possible to obtain a non-aqueous electrolytic solution secondary battery having excellent shape stability of the positive electrode active material layer and exhibiting excellent battery performance, by incorporating the positive electrode sheet into the non-aqueous electrolytic solution secondary battery. The non-aqueous electrolytic solution secondary battery according to the aspect of the present invention has excellent shape stability of the positive electrode active material layer and excellent battery performance.

## BRIEF DESCRIPTION OF THE DRAWINGS

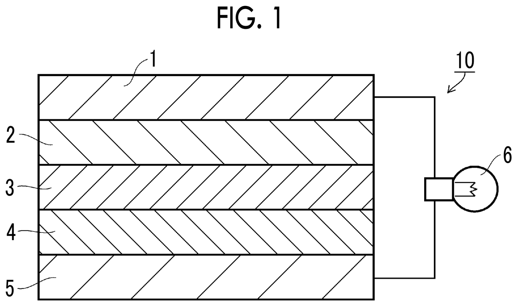

FIG. 1 is a longitudinal cross-sectional view schematically showing a basic lamination configuration of an embodiment of the secondary battery according to the present invention.

## DESCRIPTION OF THE PREFERRED EMBODIMENTS

Preferred embodiments of the present invention will be described, but the present invention is not limited to these embodiments except as specified in the present invention.

[Slurry for forming positive electrode]

The slurry for forming a positive electrode of a non-aqueous electrolytic solution secondary battery according to the embodiment of the present invention (also referred to as "positive electrode slurry according to the embodiment of the present invention") is a slurry (suspension or dispersion liquid) containing a positive electrode active material, an electrolyte, and a dispersion medium, and is a slurry suitable for forming a positive electrode active material layer of a non-aqueous electrolytic solution secondary battery.

In the positive electrode slurry according to the embodiment of the present invention, the positive electrode active material consists of a large particle group A having a particle diameter of 5.0 $\mu$m or more and a small particle group B having a particle diameter of less than 5.0 $\mu$m, in a number-based particle size distribution of the positive electrode active material, in a case where a total frequency is set to 100%, a frequency of the large particle group A is 60% or more and a frequency of the small particle group B is 40% or less, and a liquid absorption amount $\eta$B (g/100 g) of the dispersion medium per 100 g of the small particle group B satisfies the following expression B1.

$$\text{Expression B1: } 15 \leq \eta B \leq 30$$

In the positive electrode slurry according to the embodiment of the present invention, the positive electrode active material consists of the large particle group A and the small particle group B, and the liquid absorption amount of the dispersion medium of the small particle group B is controlled within the above-described range. It is considered that the small particle group B which relatively retains a large amount of the dispersion medium acts as a binder by being present in a gap of the large particle group A, and thus an interaction (adhesiveness) between solid particles is effectively enhanced. As a result, it is considered that, even in a case where the positive electrode active material layer to be formed has a film thickness of approximately 350 $\mu$m, the formed positive electrode active material layer has excellent shape stability, and the battery capacity of the non-aqueous electrolytic solution secondary battery to be obtained can be sufficiently increased.

The positive electrode active material constituting the positive electrode slurry according to the embodiment of the present invention consists of the large particle group A having a particle diameter of 5.0 $\mu$m or more and the small particle group B having a particle diameter of less than 5.0 $\mu$m. That is, the positive electrode active material used in the present invention is roughly classified into a large particle group having a particle diameter equal to or larger than a threshold value of 5.0 $\mu$m, and a small particle group having a particle diameter smaller than the threshold value.

The above-described particle diameter can be measured according to a measurement method of a number-based particle size distribution using a particle diameter measuring device, which will be described later.

In the number-based particle size distribution of the positive electrode active material, in a case where the total frequency (total number of particles of the positive electrode active material particles) is set to 100%, the frequency of the large particle group A (number of particles of the positive electrode active material classified into the large particle group A) is preferably 60% to 90%, more preferably 60% to 80%, and still more preferably 65% to 75%.

In the number-based particle size distribution of the positive electrode active material, in a case where the total frequency (total number of particles of the positive electrode active material particles) is set to 100%, the frequency of the small particle group B (number of particles of the positive electrode active material classified into the small particle group B) is preferably 10% to 40%, more preferably 20% to 40%, and still more preferably 25% to 35%.

A method of controlling the frequencies of the large particle group A and the small particle group B in the positive electrode active material is not particularly limited, and for example, they can be controlled by mixing positive electrode active materials having different median diameters.

The number-based particle size distribution of the positive electrode active material can be obtained by a method described in Examples.

In the positive electrode slurry according to the embodiment of the present invention, the liquid absorption amount $\eta$B (g/100 g) of the dispersion medium per 100 g of the small particle group B satisfies the expression B1: $15 \leq \eta B \leq 30$.

In a case where the liquid absorption amount $\eta$B is too low, interactivity between the particles of the small particle group B cannot be increased to a desired level, and thus the positive electrode active material layer to be formed is likely to collapse. On the other hand, in a case where the liquid absorption amount $\eta$B is too high, the positive electrode active material layer to be formed is likely to be in a state close to a powder, and thus also likely to collapse.

Here, in the present invention, the "liquid absorption amount $\eta$B of the dispersion medium per 100 g of the small particle group B" means a dispersion medium amount which can be retained in the structure of 100 g of the small particle group B.

The above-described liquid absorption amount $\eta$B of the dispersion medium per 100 g of the small particle group B can be determined as follows in accordance with JIS K 6217-4:2017.

-Liquid absorption amount measuring method-

An oil absorption amount measuring device (S-500 (trade name), manufactured by Asahisouken) is used for measuring the liquid absorption amount. A dispersion medium constituting the positive electrode slurry is added dropwise to 100 g of a powder of the positive electrode active material in 0.5 g increments, and a value is obtained to measure the amount (mL) of the dispersion medium added at which the torque is maximized (maximum).

In a case where the positive electrode slurry according to the embodiment of the present invention contains, as the dispersion medium, a mixed dispersion medium of two or more kinds of dispersion mediums, the above-described liquid absorption amount is measured by using the mixed dispersion medium as the "dispersion medium constituting the slurry".

In the positive electrode slurry according to the embodiment of the present invention, the expression B1 is preferably the following expression B2, and more preferably the following expression B3.

$$\text{Expression B2: } 18 \leq \eta B \leq 25$$

$$\text{Expression B3: } 18 \leq \eta B \leq 23$$

The liquid absorption amount of the small particle group B with respect to the above-described dispersion medium constituting the positive electrode slurry can be controlled by performing a surface smoothing treatment on at least the positive electrode active material classified into the small particle group B in advance, and blending the positive electrode active material into the positive electrode slurry. Examples of the surface smoothing treatment include mixing. The atmosphere during the surface smoothing treatment is not particularly limited, but it is preferable to perform the surface smoothing treatment in an inert gas atmosphere from the viewpoint of preventing oxidation or the like of the surface of the active material particles during the treatment. Examples thereof include mixing in an argon atmosphere, a nitrogen atmosphere, a nitrogen-hydrogen mixed atmosphere, and the like. A treatment device in the above-described surface smoothing treatment is not particularly limited, and examples thereof include a planetary ball mill (trade name: P-5, manufactured by FRITSCH), a jet mill crusher (trade name: JETMILL100, manufactured by Powrex corp.), a powder treatment device Nobilta (trade name: NOB MINI, manufactured by Hosokawa Micron Group), and a powder treatment device COMPOSI (trade name: CP15, manufactured by NIPPON COKE & ENGINEERING. CO., LTD.). Treatment conditions in the above-described surface smoothing treatment are not particularly limited, and for example, mixing can be performed at a rotation speed of 5,000 to 9,000 rpm and a treatment time of 5 to 20 minutes in a nitrogen atmosphere using a powder treatment device Nobilta (trade name: NOB MINI, manufactured by Hosokawa Micron Group).

As a result of the surface smoothing treatment, the liquid absorption amount $\eta B$ is reduced.

In the positive electrode slurry according to the embodiment of the present invention, a liquid absorption amount $\eta A$ (g/100 g) of the dispersion medium per 100 g of the large particle group A can be represented by the following expression A0, and it is preferable to satisfy an expression A1 and more preferable to satisfy an expression A2. As the liquid absorption amount $\eta A$ is smaller, the shape stability tends to be more excellent.

$$\text{Expression A0: } 2 \leq \eta A \leq 30$$

$$\text{Expression A1: } 2 \leq \eta A \leq 25$$

$$\text{Expression A2: } 2 \leq \eta A \leq 7$$

The liquid absorption amount $\eta A$ can be measured in the same manner as the liquid absorption amount $\eta B$.

The liquid absorption amount $\eta A$ of the dispersion medium of the large particle group A can be controlled within the above-described range by performing the surface smoothing treatment on the large particle group A, as in the small particle group B. The surface smoothing treatment is the same as that described in the small particle group B.

The liquid absorption amount $\eta A$ of the dispersion medium of the large particle group A can be calculated by the same method as the liquid absorption amount $\eta B$ of the dispersion medium of the small particle group B.

An absolute value ($|\eta B - \eta A|$) (g/100 g) of a difference in liquid absorption amount between the liquid absorption amount $\eta A$ of the dispersion medium of the large particle group A and the liquid absorption amount $\eta B$ of the dispersion medium of the small particle group B preferably satisfies the following expression C0, more preferably satisfies an expression C1, and still more preferably satisfies an expression C2.

$$\text{Expression C0: } 1 \leq |\eta B - \eta A| \leq 24$$

$$\text{Expression C1: } 1 \leq |\eta B - \eta A| \leq 21$$

$$\text{Expression C2: } 5 \leq |\eta B - \eta A| \leq 18$$

In the positive electrode slurry according to the embodiment of the present invention, a maximum filling rate of the positive electrode active material, which is calculated from a volume-based cumulative particle size distribution of the positive electrode active material, is preferably 75% or more, and more preferably 80% or more. By controlling the particle size distribution of the positive electrode active material in this way, a filling rate of the positive electrode active material can be increased in the positive electrode active material layer to be obtained.

The maximum filling rate is an estimated value calculated based on data of the volume-based cumulative particle size distribution of the positive electrode active material contained in the positive electrode slurry according to the embodiment of the present invention.

Specifically, the maximum filling rate can be calculated by a method described in Examples of the present invention.

A specific surface area of the small particle group B is preferably 8.0 to 13.0 m$^2$/g and more preferably 9.0 to 12.5 m$^2$/g.

A specific surface area of the large particle group A is preferably 5.0 to 8.5 m$^2$/g and more preferably 5.2 to 8.3 m$^2$/g.

Each of the specific surface areas of the large particle group A and the small particle group B can be measured by a BET method as follows.

-BET specific surface area measuring method-

0.2 g of the sample is dried at 120°C for 6 hours, and then measured under the following measurement conditions using BELSORP mini (trade name) manufactured by MicrotracBEL Corp.

· Adsorption temperature: 77 K
· Adsorbed gas: N$_2$
· Equilibrium time: 100 seconds
· Purge gas: He

As a method for obtaining the particle size distribution consisting of the large particle group A and the small particle group B defined in the present invention, a positive electrode active material having a large median diameter (D50) and a positive electrode active material having a small median diameter (D50) can be mixed and used as the positive electrode active material.

The median diameter (D50) of the positive electrode active material having a large median diameter (D50) (positive electrode active material a, large particle group a) described above can be set to 6.0 to 20.0 μm, and is preferably 7.0 to 15.0 μm, more preferably 8.0 to 14.0 μm, and still more preferably 8.3 to 13.0 μm.

The median diameter (D50) of the positive electrode active material having a small median diameter (D50) (positive electrode active material b, small particle group b) described above can be set to 0.1 to 4.0 μm, and is preferably 0.2 to 3.0 μm, more preferably 0.5 to 2.0 μm, and still more preferably 0.8 to 1.2 μm.

In order to set the positive electrode active material a (large particle group a) and the positive electrode active material b (small particle group b) to the predetermined median diameters (D50), a normal pulverizer or classifier may be used. A positive electrode active material obtained using a baking method may be used after being washed with water, an acidic aqueous solution, an alkaline aqueous solution, or an organic solvent.

The median diameters (D50) of the positive electrode active material a (large particle group a) and the positive electrode active material b (small particle group b) can be measured by the following method.

-Median diameter (D50) measuring method-

The positive electrode active material is dispersed in water, and a particle diameter value (median diameter D50 on a volume basis in water) obtained by measuring a particle diameter with a laser diffraction/scattering-type particle size distribution analyzer (for example, Particle LA-960V2 manufactured by HORIBA, Ltd.) is adopted. The same applies to a median diameter (D50) of solid particles other than the positive electrode active material.

The positive electrode slurry according to the embodiment of the present invention contains can contain the same components as a normal positive electrode slurry, in addition to the above-described positive electrode active material consisting of the large particle group A and the small particle group B, the electrolyte, and the dispersion medium. For example, a conductive auxiliary agent or the like can be contained.

Hereinafter, each component constituting the positive electrode slurry according to the embodiment of the present invention will be described in detail.

<Positive electrode active material>

As the positive electrode active material, a positive electrode active material capable of reversibly intercalating and deintercalating lithium ions is preferable. The material is not particularly limited, and examples thereof include transition metal oxides, organic matter, substances capable of being complexed with Li, such as sulfur, and complexes of sulfur and metal.

Among these, as the positive electrode active material, lithium-containing transition metal oxides are preferably used, and lithium-containing transition metal oxides having a transition metal element M$^a$ (one or more elements selected from Co, Ni, Fe, Mn, Cu, and V) are more preferable. In addition, an element M$^b$ (an element of Group 1 (Ia) of the periodic table other than lithium, an element of Group 2 (IIa), or an element such as Al, Ga, In, Ge, Sn, Pb, Sb, Bi, Si, P, and B) may be mixed into the lithium-containing transition metal oxide. The mixed amount is preferably 0 to 30 mol% with respect to the amount (100 mol%) of the transition metal element $M^a$. It is more preferable that the transition metal oxide is synthesized by mixing the above-described components such that a molar ratio $Li/M^a$ is 0.3 to 2.2.

Specific examples of the lithium-containing transition metal oxide include (MA) lithium-containing transition metal oxides having a bedded salt-type structure, (MB) lithium-containing transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds.

Specific examples of the lithium-containing transition metal oxide having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium nickel manganese oxide).

Specific examples of the lithium-containing transition metal oxide having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$; cobalt phosphates such as $LiCoPO_4$; iron pyrophosphates such as $LiFeP_2O_7$; and monoclinic NASICON-type vanadium phosphate salts such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates such as $Li_2CoPO_4F$.

Examples of the lithium-containing transition metal silicate compound (ME) include $Li_2FeSiO_4$, $Li_2MnSiO_4$, and $Li_2CoSiO_4$.

In the present invention, as the positive electrode active material, the lithium-containing transition metal oxide having a bedded salt-type structure (MA) or the lithium-containing transition metal phosphoric acid compound (MC) is preferable, $LiNi_{1/3}Co_{1/3}Mn_{1/3}O_2$ or $LiFePO_4$ is more preferable, and $LiFePO_4$ is still more preferable.

A chemical formula of a compound obtained by the above-described baking method can be calculated using an inductively coupled plasma (ICP) emission spectroscopy as a measuring method from the mass difference of powder before and after baking as a convenient method.

A surface of the positive electrode active material may be coated with an oxide such as another metal oxide and a carbon-based material. These surface coating layers can function as an interface resistance-stabilizing layer.

Examples of a surface coating material include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and $Li_3AlF_6$. In addition, a carbon-based material such as C, SiC, and SiOC (carbon-added silicon oxide) can also be used as the surface coating material.

From the viewpoint of increasing the electron conductivity to a desired level, it is preferable that the surface of the positive electrode active material is coated with the carbon-based material. In this case, it is preferable that the surface of the positive electrode active material is coated with carbon (C). The surface coating with carbon can be formed by firing the positive electrode active material in the presence of an additive (organic substance) serving as a carbon source. As the additive, for example, a styrene-maleic acid anhydride copolymer, polystyrene, polycarbonate, or the like can be used.

In addition, the surface of the positive electrode active material may be subjected to a surface treatment with sulfur or phosphorus.

Furthermore, a surface treatment may be carried out on surfaces of particles of the positive electrode active material with an actinic ray or an active gas (plasma or the like) before or after the coating of the surfaces.

One kind of the above-described positive electrode active material may be used alone, or two or more kinds thereof may be used in combination.

A content of the positive electrode active material in the total content of the positive electrode active material and the conductive auxiliary agent in the positive electrode slurry is preferably 96.00% to 99.97% by mass, more preferably 98.00% to 99.97% by mass, still more preferably 99.00% to 99.95% by mass, even more preferably 99.20% to 99.90% by mass, even still more preferably 99.50% to 99.80% by mass, further more preferably 99.55% to 99.80% by mass, and even further more preferably 99.60% to 99.80% by mass.

<Conductive auxiliary agent>

The positive electrode slurry according to the embodiment of the present invention can contain a conductive auxiliary agent.

As the conductive auxiliary agent, a conductive auxiliary agent which is known as a general conductive auxiliary agent can be used. For example, the conductive auxiliary agent may be graphite such as natural graphite and artificial graphite; carbon black such as acetylene black, ketjen black, and furnace black; irregular carbon such as needle cokes; a carbon fiber such as vapor-grown carbon fiber and carbon nanotube; a carbonaceous material such as graphene and fullerene which are electron-conductive materials; metal powder or a metal fiber of copper, nickel, or the like; and a conductive polymer such as polyaniline, polypyrrole, polythiophene, polyacetylene, and a polyphenylene derivative.

In the present invention, the conductive auxiliary agent is preferably a carbonaceous material, preferably carbon blacks, and more preferably ketjen black.

In a case where the positive electrode active material and the conductive auxiliary agent are used in combination, among the above-described conductive auxiliary agents, a conductive auxiliary agent which does not intercalate and deintercalate Li and does not function as an active material at the time of charging and discharging a battery is regarded as the conductive auxiliary agent. Therefore, among the conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

Examples of a commercially available product of the conductive auxiliary agent include the following.

Ketjen black: Carbon ECP (specific surface area = 890 $m^2$/g), Carbon ECP600JD (specific surface area = 1,480 $m^2$/g), and Carbon ECP200L (specific surface area = 430 $m^2$/g) (all manufactured by LION SPECIALTY CHEMICALS CO., LTD.)

Carbon black: LITX300 (specific surface area = 180 $m^2$/g) and LITX-HP (specific surface area = 100 $m^2$/g) (both manufactured by Cabot Corporation)

Carbon nanotube (CNT): BT1001M (specific surface area = 272 $m^2$/g) and BT1003M (specific surface area = 230 $m^2$/g) (both manufactured by LG Chem); JENOTUBE6A (specific surface area = 680 $m^2$/g) and JENOTUBE10B (specific surface area = 230 $m^2$/g) (both JEIO)

One kind of conductive auxiliary agent or two or more kinds of conductive auxiliary agents may be used.

A shape of the conductive auxiliary agent is not particularly limited, but is preferably a particulate shape.

A median diameter (D50) of the conductive auxiliary agent is not particularly limited. For example, the median diameter is preferably 0.01 to 50 $\mu$m, more preferably 0.1 to 10 $\mu$m, and still more preferably 0.2 to 2.0 $\mu$m.

The conductive auxiliary agent may be subjected to a surface treatment.

A method of the surface treatment is not particularly limited, and a surface treatment using a chemical treatment agent or an atomic layer deposition (ALD) treatment is preferable.

As the chemical treatment agent, an organic silicon compound (more preferably a silane coupling agent), an organic phosphonic acid compound, or the like is preferable; and examples thereof include methyltrimethoxysilane (MTMS), octadecyltrimethoxysilane, hexamethyldisilazane, tetraethoxysilane, trifluoropropyltrimethoxysilane, vinyltrimethoxysilane, phenyltrimethoxysilane, 3-aminopropyltriethoxysilane, 1H,1H,2H,2H-perfluorooctyltriethoxysilane, trimethoxy(octyl)silane, 1H,1H,2H,2H-perfluorooctane phosphonic acid, 1-octyl phosphonic acid, and perfluoropolyether triethoxysilane (KY1903 (trade name)).

In the ALD treatment, examples of a layer to be deposited include $HfO_2$, $SiO_2$, $ZrO_2$, $Ta_2O_5$, and $TiO_2$.

A content of the conductive auxiliary agent in the total content of the positive electrode active material and the conductive auxiliary agent in the positive electrode slurry is preferably 0.03% to 4.00% by mass, more preferably 0.03% to 2.00% by mass, still more preferably 0.05% to 1.00% by mass, even more preferably 0.10% to 0.80% by mass, even still more preferably 0.20% to 0.50% by mass, further more preferably 0.20% to 0.45% by mass, and even further more preferably 0.20% to 0.40% by mass.


<Electrolyte>


As the electrolyte, an electrolyte used for the electrolytic solution of the semi-solid state secondary battery can be used. A metal salt is preferable, and examples thereof include a lithium salt, a potassium salt, a sodium salt, a calcium salt, and a magnesium salt.

As the lithium salt, a lithium salt which is usually used for an electrolyte of a lithium ion secondary battery is preferable, and examples thereof include the following lithium salts.

(L-1) Inorganic lithium salt: inorganic fluoride salt such as $LiPF_6$, $LiBF_4$, $LiAsF_6$, and $LiSbF_6$; perhalogenate such as $LiClO_4$, $LiBrO_4$, and $LiIO_4$; an inorganic chloride salt such as $LiAlCl_4$; and the like

(L-2) Fluorine-containing organic lithium salt: perfluoroalkane sulfonate such as $LiCF_3SO_3$; perfluoroalkanesulfonylimide salt such as $LiN(CF_3SO_2)_2$, $LiN(CF_3CF_2SO_2)_2$, $LiN(FSO_2)_2$, and $LiN(CF_3SO_2)(C_4F_9SO_2)$; perfluoroalkane sulfonylmethide salt such as $LiC(CF_3SO_2)_3$; fluoroalkyl fluorophosphate such as $Li[PF_5(CF_2CF_2CF_3)]$, $Li[PF_4(CF_2CF_2CF_3)_2]$, $Li[PF_3(CF_2CF_2CF_3)_3]$, $Li[PF5(CF_2CF_2CF_2CF_3)]$, $Li[PF_4(CF_2CF_2CF_2CF_3)_2]$, and $Li[PF_3(CF_2CF_2CF_2CF_3)_3]$; and the like

(L-3) Oxalatoborate salt: lithium bis(oxalato)borate, lithium difluorooxalatoborate, and the like

Among these, $LiPF_6$, $LiBF_4$, $LiAsF_6$, $LiSbF_6$, $LiClO_4$, $Li(R^{f1}SO_3)$, $LiN(R^{f1}SO_2)_2$, $LiN(FSO_2)_2$, or $LiN(R^{f1}SO_2)$

$(R^{f2}SO_2)$ is preferable; $LiPF_6$, $LiBF_4$, $LiN(R^{f1}SO_2)_2$, $LiN(FSO_2)_2$, or $LiN(R^{f1}SO_2)(R^{f2}SO_2)$ is more preferable; and $LiPF_6$ is particularly preferable. Here, $R^{f1}$ and $R^{f2}$ each represent a perfluoroalkyl group, and the number of carbon atoms in the perfluoroalkyl group is preferably 1 to 6.

As the lithium salt used in the electrolytic solution according to the embodiment of the present invention, one kind of electrolyte may be used alone, or two or more kinds of electrolytes may be arbitrarily combined.

In the present invention, it is preferable that the above-described electrolyte is added to the dispersion medium to prepare an electrolytic solution, and the positive electrode slurry is prepared using the electrolytic solution. A concentration of the lithium salt in the electrolytic solution is usually 10.0% to 50.0% by mass, preferably 15.0% to 30.0% by mass. A molar concentration thereof is preferably 0.5 to 1.5 M.

<Dispersion medium>

As the dispersion medium, a non-aqueous solvent is used.

As the non-aqueous solvent, aprotic organic solvents are preferable, and among these, an aprotic organic solvent having 2 to 10 carbon atoms is more preferable.

Examples of such a non-aqueous solvent include a chain-like or cyclic carbonate compound, a lactone compound, a chain-like or cyclic ether compound, an ester compound, a nitrile compound, an amide compound, an oxazolidinone compound, a nitro compound, a chain-like or cyclic sulfone or sulfoxide compound, and a phosphoric acid ester compound.

A compound having an ether bond, a carbonyl bond, an ester bond, or a carbonate bond is preferable. These compounds may have a substituent.

Examples of the non-aqueous solvent include ethylene carbonate, fluorinated ethylene carbonate, vinylene carbonate, propylene carbonate, butylene carbonate, dimethyl carbonate, diethyl carbonate, ethyl methyl carbonate, methyl propyl carbonate, γ-butyrolactone, γ-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethyl acetate, ethyl trimethyl acetate, acetonitrile, glutaronitrile, adiponitrile, methoxyacetonitrile, 3-methoxypropionitrile, N,N-dimethylformamide, N-methylpyrrolidone (NMP), N-methyloxazolidinone, N,N'-dimethylimidazolidinone, nitromethane, nitroethane, sulfolane, trimethyl phosphate, dimethylsulfoxide, and dimethylsulfoxide phosphate. These may be used alone or in combination of two or more.

The non-aqueous solvent used in the present invention is not limited to these solvents.

The dispersion medium is preferably a mixed solvent of ethylene carbonate (EC), propylene carbonate (PC), and dimethyl carbonate (DMC).

The positive electrode slurry according to the embodiment of the present invention does not contain a binder. The binder herein means a binder used in a general non-aqueous electrolytic solution secondary battery, and is, for example, a thermoplastic resin such as a fluororesin (polytetrafluoroethylene (PTFE), polyvinylidene fluoride (PVDF), or the like), polyethylene, polypropylene, polyacrylate, and polyimide; an elastomer such as ethylene-propylene-diene rubber (EPDM), sulfonated EPDM, styrene butadiene rubber (SBR), and fluororubber; or a polysaccharide polymer.

In the positive electrode slurry according to the embodiment of the present invention, a content of solid contents (components other than the dispersion medium (solvent)) in the positive electrode slurry is preferably more than 60% by mass, more preferably 65% by mass or more, and still more preferably 70% by mass or more. The content of the solid content is preferably 60% to 95% by mass, more preferably 65% to 92% by mass, still more preferably 70% to 90% by mass, even more preferably 72% to 88% by mass, and particularly preferably 75% to 85% by mass.

<Other components>

The positive electrode slurry according to the embodiment of the present invention can contain, as desired, an ionic liquid, a thickener, an antifoaming agent, a leveling agent, a dehydrating agent, an antioxidant, or the like. These components can be used as those which are usually used in the non-aqueous electrolytic solution secondary battery.

In a case where the positive electrode slurry according to the embodiment of the present invention contains other components, a content of the other components is preferably 0.05 to 1.5 parts by mass and more preferably 0.1 to 1.0 parts by mass with respect to 100 parts by mass of the total content of the positive electrode active material and the conductive auxiliary agent.

<Method for preparing positive electrode slurry>

The positive electrode slurry according to the embodiment of the present invention can be prepared by mixing the positive electrode active material consisting of the large particle group A and the small particle group B, the electrolyte, the dispersion medium, and other optional components, for example, using various mixers usually used.

[Positive electrode sheet]

The positive electrode sheet according to the embodiment of the present invention is a positive electrode sheet including a positive electrode active material layer formed of the positive electrode slurry according to the embodiment of the present invention, and is a positive electrode sheet suitable as a positive electrode sheet of a non-aqueous electrolytic solution secondary battery.

In the positive electrode sheet according to the embodiment of the present invention, the positive electrode active material layer contains the positive electrode active material consisting of the large particle group A having a particle diameter of 5.0 $\mu$m or more and the small particle group B having a particle diameter of less than 5.0 $\mu$m, in the number-based particle size distribution of the positive electrode active material, in a case where the total frequency is set to 100%, the frequency of the large particle group A is 60% or more and the frequency of the small particle group B is 40% or less, and the liquid absorption amount $\eta$B (g/100 g) of the dispersion medium per 100 g of the small particle group B satisfies the above expression B1.

In the present invention, the term "positive electrode sheet" simply includes both an aspect in which the positive electrode sheet is incorporated as a constituent member in a non-aqueous electrolytic solution secondary battery (a state of being incorporated into a secondary battery) and an aspect in which the positive electrode sheet is a positive electrode material before being incorporated into the non-aqueous electrolytic solution secondary battery. That is, a structure (area, thickness, and the like) of the positive electrode sheet may be a structure which is used as the positive electrode, or a structure which can be processed into the structure which is used as the positive electrode.

It is sufficient that the positive electrode sheet according to the embodiment of the present invention includes the positive electrode active material layer formed of the positive electrode slurry according to the embodiment of the present invention, and it may have a form in which the positive electrode active material layer and a positive electrode collector are laminated. More specifically, the positive electrode active material layer may be laminated on both surfaces of the positive electrode collector, or the positive electrode active material layer may be laminated on one surface of the positive electrode collector. The positive electrode sheet is usually a sheet having a configuration in which the positive electrode active material layer is laminated on the positive electrode collector.

The positive electrode active material layer may be composed of a single layer or may be composed of a plurality of layers.

The positive electrode sheet may further include other layers as necessary. Examples of the other layers include a protective layer (peeling sheet) and a coating layer. In the positive electrode sheet according to the embodiment of the present invention, it is preferable that the positive electrode active material layer is laminated in a state of being in direct contact with the positive electrode collector.

A thickness of the positive electrode active material layer (slurry layer) in the positive electrode sheet according to the embodiment of the present invention is not particularly limited, and can be set to, for example, 50 to 600 $\mu$m, preferably 150 to 500 $\mu$m and more preferably 200 to 400 $\mu$m.

In a case where the positive electrode sheet according to the embodiment of the present invention includes the positive electrode collector, the positive electrode collector constituting the positive electrode sheet according to the embodiment of the present invention is not particularly limited, and those used in a typical secondary battery can be appropriately applied. For the positive electrode collector which is usually used for these secondary batteries, for example, JP2016-201308A, JP2005-108835A, JP2012-185938A, WO2018/135395A, and the like can be appropriately referred to.

As the positive electrode collector, aluminum, an aluminum alloy, or the like is preferable.

In the positive electrode sheet according to the embodiment of the present invention, the positive electrode active material layer is less likely to collapse (peel off). In general, the collapse is remarkable at an end part of the positive electrode active material layer.

The positive electrode sheet according to the embodiment of the present invention can be obtained by forming the positive electrode active material layer using the positive electrode slurry according to the embodiment of the present invention. For example, the positive electrode sheet according to the embodiment of the present invention can be obtained by forming a film using the positive electrode slurry according to the embodiment of the present invention. More specifically, the positive electrode sheet including the positive electrode active material layer on a base material such as the positive electrode collector can be obtained by applying the positive electrode slurry according to the embodiment of the present invention onto the base material (possibly through another layer).

A method of applying the positive electrode slurry is not particularly limited, and for example, the positive electrode slurry can be applied by using a roll coater, drop coating, pressing (roll pressing or flat plate pressing) the positive electrode slurry after evenly installing the positive electrode slurry on the positive electrode collector, or installing the positive electrode slurry in a frame having a specified thickness and pressing the positive electrode slurry.

[Non-aqueous electrolytic solution secondary battery]

The non-aqueous electrolytic solution secondary battery according to the embodiment of the present invention (hereinafter, also referred to as "secondary battery according to the embodiment of the present invention") includes the positive electrode sheet according to the embodiment of the present invention as a positive electrode. The secondary battery according to the embodiment of the present invention is the same as a typical non-aqueous electrolytic solution secondary battery, except that it has a configuration in which the positive electrode sheet according to the embodiment of the present invention is provided as a positive electrode.

That is, the secondary battery according to the embodiment of the present invention can be obtained by incorporating the positive electrode sheet according to the embodiment of the present invention as a positive electrode of a typical non-aqueous electrolytic solution secondary battery.

Before the description of the secondary battery according to the embodiment of the present invention, a structure of a general non-aqueous electrolytic solution secondary battery will be described.

FIG. 1 is a schematic cross-sectional view showing a laminated structure of a general non-aqueous electrolytic solution secondary battery 10, including an operation portion which acts in a case where the battery is operated. The non-aqueous electrolytic solution secondary battery 10 has a laminated structure in which a negative electrode collector 1, a negative electrode active material layer 2, a separator 3, a positive electrode active material layer 4, and a positive electrode collector 5 are laminated in this order from the negative electrode side. The negative electrode active material layer 2, the positive electrode active material layer 4, and a space therebetween are filled with a non-aqueous electrolytic solution (not shown), and are separated by the separator 3. The separator 3 has pores, and functions as a positive and negative electrode-separating membrane which insulates the positive electrode and the negative electrode from each other while allowing transmission of the electrolytic solution and ions into the pores in a state in which a typical battery is used. With such a structure, for example, in a case of the lithium ion secondary battery, during charge, while electrons ($e^-$) are supplied to the negative electrode side through an external circuit, lithium ions ($Li^+$) move from the positive electrode through the electrolytic solution and are accumulated in the negative electrode. On the other hand, during discharge, while the lithium ions ($Li^+$) accumulated in the negative electrode are returned to the positive electrode side through the electrolytic solution, electrons are supplied to an operation portion 6. In the example shown in the drawing, a light bulb is adopted as the operation portion 6, which is turned on by the discharge.

Subsequently, a basic configuration characteristic of the semi-solid state secondary battery will be described. As described above, in the semi-solid state secondary battery, the electrode active material layer is formed in a slurry state containing an electrode active material and an electrolyte. Therefore, the secondary battery according to the embodiment of the present invention is different from a general non-aqueous electrolytic solution secondary battery in terms of the fact that the electrode active material layer is a layer formed of a slurry (suspension or dispersion liquid) obtained by dispersing the electrode active material in a non-aqueous electrolytic solution.

That is, in a general non-aqueous electrolytic solution secondary battery, a coating liquid is prepared in which the electrode active material is dispersed in a medium containing no electrolyte, the coating liquid is applied onto a collector to form a coating film, and then the coating film is dried to form a thin film-shaped electrode active material layer. The coating liquid is usually blended with a binding material (binder), and a hard electrode active material layer in which electrode active material particles are firmly bound to each other is formed. Since the non-aqueous electrolytic solution is present on the electrode active material layer formed in this way (between the negative electrode active material layer and the positive electrode active material layer), the electrode active material layer is in a state of a hard solid particle layer as a whole even in a case where there is a portion in which the non-aqueous electrolytic solution can permeate, and is not a slurry layer.

On the other hand, in the semi-solid state secondary battery, the electrode active material layer is an electrode slurry layer obtained by dispersing the solid particles containing the electrode active material and the conductive auxiliary agent in the non-aqueous electrolytic solution which is obtained by dissolving the lithium salt (electrolyte) in the non-aqueous solvent. In a case where the electrode slurry layer functions as the electrode active material layer, a strong bonding property is not required between the electrode active material particles, and thus the electrode slurry layer generally does not contain a binding material. The basic layer configuration of the semi-solid state secondary battery is the same as the layer configuration shown in FIG. 1, except that the electrode active material layer is an electrode slurry layer and the electrode slurry layer and the separator are in contact with each other.

In the secondary battery according to the embodiment of the present invention, the positive electrode active material layer is a slurry layer formed of the positive electrode slurry according to the embodiment of the present invention in the above-described semi-solid state secondary battery.

As the negative electrode active material layer, a negative electrode active material layer formed of a typical negative electrode slurry can be used.

In the secondary battery according to the embodiment of the present invention, each material and member such as a negative electrode active material, a negative electrode collector, and a separator is not particularly limited, except that the positive electrode sheet according to the embodiment of the present invention is provided as the positive electrode of the secondary battery. As these materials, members, and the like, those used for a typical secondary battery can be appropriately adopted. For the members and the manufacturing methods which are usually used for these secondary batteries, for example, JP2016-201308A, JP2005-108835A, JP2012-185938A, WO2018/135395A, and the like can be appropriately referred to.

In the method for manufacturing the non-aqueous electrolytic solution secondary battery according to the embodiment of the present invention, a typical method can be appropriately adopted, except that the positive electrode sheet according to the embodiment of the present invention is used as the positive electrode. For example, JP2016-201308A, JP2005-108835A, JP2012-185938A, JP2017-147222A, and the like can be appropriately referred to.

The non-aqueous electrolytic solution secondary battery according to the embodiment of the present invention can be mounted on electronic apparatuses such as such as notebook computers, pen-input personal computers, mobile PCs, e-book players, mobile phones, cordless telephone handsets, pagers, handheld terminals, portable fax machines, portable copiers, portable printers, personal stereos, camcorders, LCD televisions, handheld vacuum cleaners, portable CD players, MiniDisc players, electric shavers, transceivers, electronic organizers, calculators, memory cards, portable tape recorders, radios, backup power supplies, and memory cards. In addition, in a case of being used for consumer applications, the non-aqueous electrolytic solution secondary battery according to the embodiment of the present invention can be mounted on an automobile, an electric vehicle, a motor, a lighting instrument, a toy, a game device, a road conditioner, a watch, a strobe, a camera, a medical device (a pacemaker, a hearing aid, a shoulder massage device, and the like), or the like. Furthermore, the non-aqueous electrolytic solution secondary can be used for various military usages and universe usages. In addition, the secondary battery according to the embodiment of the present invention can also be combined with a solar battery.

Hereinafter, the present invention will be described in more detail with reference to Examples. The present invention is not interpreted as being limited thereto.

Examples

[Preparation of positive electrode active material]

A positive electrode active material was prepared as follows.

<LFP1-1 to LFP1-3 (large particle group a)>

(LFP1-1)

A LiFePO$_4$ (LFP) powder raw material (manufactured by LOPAL TECH.CO., LTD., P198-S13 (trade name)) was used.

(LFP1-2 and LFP1-3)

20 g of LFP1-1 was put into a powder treatment device Nobilta (trade name: NOB MINI, manufactured by Hosokawa Micron Group), and a surface was smoothed under a nitrogen atmosphere at the rotation speed and the treatment time shown in Table 1 to obtain powder-like positive electrode active materials LFP1-2 and LFP1-3, respectively.

<LFP2-1 to LFP2-6 (small particle group b)>

(LFP2-1)

A LiFePO$_4$ (LFP) powder raw material (manufactured by LOPAL TECH.CO., LTD., P198-T5 (trade name)) was used.

(LFP2-2 to LFP2-6)

20 g of LFP2-1 was put into a powder treatment device Nobilta (trade name: NOB MINI, manufactured by Hosokawa Micron Group), and a surface was smoothed under a nitrogen atmosphere at the rotation speed and the treatment time shown in Table 1 to obtain powder-like positive electrode active materials LFP2-2 to LFP2-6, respectively.

<NMC1-1 to NMC1-3 (large particle group a)>

(NMC1-1)

An $LiNi_{1/3}Co_{1/3}Mn_{1/3}O_2$ (NMC) powder raw material (manufactured by TOSHIMA Manufacturing Co., Ltd., NCM111 (particle diameter: 12 $\mu$m) (trade name)) was used.

(NMC1-2 and NMC1-3)

20 g of NMC1-1 was put into a powder treatment device Nobilta (trade name: NOB MINI, manufactured by Hosokawa Micron Group), and a surface was smoothed under a nitrogen atmosphere at the rotation speed and the treatment time shown in Table 1 to obtain powder-like positive electrode active materials NMC1-2 and NMC1-3, respectively.

<NMC2-1 to NMC2-6 (small particle group b)>

(NMC2-1)

An $LiNi_{1/3}Co_{1/3}Mn_{1/3}O_2$ (NMC) powder raw material (manufactured by TOSHIMA Manufacturing Co., Ltd., NCM111 (particle diameter: 2 $\mu$m) (trade name)) was used.

(NMC2-2 to NMC2-6)

20 g of NMC2-1 was put into a powder treatment device Nobilta (trade name: NOB MINI, manufactured by Hosokawa Micron Group), and a surface was smoothed under a nitrogen atmosphere at the rotation speed and the treatment time shown in Table 1 to obtain powder-like positive electrode active materials NMC2-2 to NMC2-6, respectively.
In a case where number-based particle size distributions of LFP1-1 to LFP1-3 and NMC1-1 to NMC1-3 were obtained as described later, it was confirmed that each of the positive electrode active materials did not substantially contain particles having a particle diameter of less than 5.0 $\mu$m.
In a case where number-based particle size distributions of LFP2-1 to LFP2-6 and NMC2-1 to NMC2-6 were obtained as described later, it was confirmed that each of the positive electrode active materials did not substantially contain particles having a particle diameter of 5.0 $\mu$m or more.

(Measuring method of number-based particle size distribution)

0.01 g of each of the positive electrode active materials was dispersed in ethanol to prepare a dispersion having a transmittance of laser light (light having a wavelength of 650 nm) of 90% or more and 95% or less. A particle diameter (sphere-equivalent diameter) of all particles in the dispersion was measured using a particle diameter measuring device (LA-920 (trade name), manufactured by HORIBA, Ltd.) to obtain number-based particle size distribution data (cumulative particle size distribution data).

[Table 1]

| | Rotation speed | Treatment time | | Rotation speed | Treatment time |
|---|---|---|---|---|---|
| LPF1-1 | Not treated | | NMC1-1 | Not treated | |
| LPF1-2 | 8000 rpm | 5 min | NMC1-2 | 6000 rpm | 5 min |
| LPF1-3 | 8000 rpm | 10 min | NMC1-3 | 6000 rpm | 10 min |
| LPF2-1 | Not treated | | NMC2-1 | Not treated | |
| LPF2-2 | 8000 rpm | 5 min | NMC2-2 | 6000 rpm | 5 min |
| LPF2-3 | 8000 rpm | 10 min | NMC2-3 | 6000 rpm | 10 min |
| LPF2-4 | 8000 rpm | 12 min | NMC2-4 | 6000 rpm | 12 min |
| LPF2-5 | 8500 rpm | 10 min | NMC2-5 | 6500 rpm | 10 min |
| LPF2-6 | 8500 rpm | 15 min | NMC2-6 | 6500 rpm | 15 min |

[Measurement of median diameter (D50)]

Median diameters (D50) of the large particle group a and the small particle group b obtained as described above were determined as described above. The median diameters (D50) of the large particle group a and the small particle group b are indicated in the column of "D50" in Table 2.

[Measurement of specific surface area]

Specific surface areas of the large particle group a and the small particle group b obtained as described above were determined as described above. The specific surface areas of the large particle group a and the small particle group b are indicated in the column of "Specific surface area" in Table 2.

[Method of evaluating liquid absorption amount]

The liquid absorption amount ηA of the dispersion medium used in the slurry for forming a positive electrode, which was used for the large particle group a, and the liquid absorption amount ηB of the dispersion medium used in the slurry for forming a positive electrode, which was used for the small particle group b, were measured as described above. The liquid absorption amount ηA of each large particle group a is indicated in the column of "Liquid absorption amount ηA" in Table 2, and the liquid absorption amount ηB of the small particle group b is indicated in the column of "Liquid absorption amount ηB".

[Method of evaluating maximum filling rate]

0.01 g of the positive electrode active material powder consisting of the large particle group A and the small particle group B was dispersed in ethanol at the ratio shown in Table 2, and a dispersion was prepared such that a transmittance of laser light (light ray having a wavelength of 650 nm) was 90% or more and 95% or less. A particle diameter (sphere-equivalent diameter) of all particles in the dispersion was measured using a particle diameter measuring device (LA-920 (trade name), manufactured by HORIBA, Ltd.) to obtain volume-based cumulative particle size distribution data of particle diameters. The above-described cumulative particle size distribution data was input to multi-component particle filling layer space rate estimation model calculation software (CALVOID N.EXE, developed by Dr. Michitaka Suzuki, Professor Emeritus, Department of Chemical Engineering, Graduate School of Engineering, University of Hyogo; reference URL: https://www.eng.u-hyogo.acjp/group/group42/hakaru/calvoid.html), and an estimated void fraction was obtained and the maximum filling rate was calculated (Maximum filling rate (%) = 100 - Estimated void fraction).
In a case of obtaining the above-described estimated void fraction, a constant value ($\varepsilon j = 0.36$ for each component particle) was used as a space rate $\varepsilon j$ in a case where each component particle was filled alone, and the volume-based cumulative particle size distribution measured above was used as a undersieve cumulative weight percentage $Rj$.

[Preparation of non-aqueous electrolytic solution I]

As a dispersion medium, a mixed solvent in which ethylene carbonate (EC), propylene carbonate (PC), and dimethyl carbonate (DMC), were mixed at EC:PC:DMC = 3:4:3 (mass ratio) was blended with $LiPF_6$ as an electrolyte (lithium salt) to a concentration of 1 M to prepare a non-aqueous electrolytic solution (non-aqueous electrolytic solution I).

[Production of slurry for forming positive electrode]

75 parts by mass of the positive electrode active material including the large particle group A and the small particle group B shown in Table 2 at the ratio shown in Table 2, 0.3 parts by mass of Ketjen black (Carbon ECP600JD (trade name), manufactured by LION SPECIALTY CHEMICALS CO., LTD.) as a conductive auxiliary agent, and 24.7 parts by mass of the non-aqueous electrolytic solution I were mixed at 1,250 rpm for 90 seconds with a centrifugal planetary mixer (manufactured by Thinky Corporation; Awatori Nentaro ARE-310 (trade name)) to obtain a slurry for forming a positive electrode (Nos. 1 to 24). The positive electrode active material used for producing the slurries for forming a positive electrode in Experiment Nos. 2 to 4, 6 to 12, 14 to 16, and 18 to 24 was a mixture of the large particle group a and the small particle group b, and was a mixture in which the large particle group A and the small particle group B had the number frequency shown in Table 2.

[Production of positive electrode sheet]

Each of the slurries for forming a positive electrode obtained as described above was applied onto one surface of a positive electrode collector (aluminum foil) having a thickness of 12 $\mu$m to obtain a positive electrode sheet consisting of the positive electrode collector and a positive electrode active material layer (slurry layer). A thickness of the positive electrode active material layer in the positive electrode sheet was 350 $\mu$m.

[Production of non-aqueous electrolytic solution secondary battery]

1) Preparation of negative electrode sheet

65 parts by mass of a negative electrode active material (artificial graphite, UF-G30, manufactured by Showa Denko K.K.), 1 part by mass of acetylene black (Li-100 (trade name), manufactured by Denka Company Limited) as a conductive auxiliary agent, and 34 parts by mass of the non-aqueous electrolytic solution I were mixed at 1,250 rpm for 90 seconds using a centrifugal planetary mixer (manufactured by Thinky Corporation; Awatori Nentaro (trade name)) to obtain a slurry for forming a negative electrode.

The obtained slurry for forming a negative electrode was applied onto one surface of a negative electrode collector (copper foil) having a thickness of 12 $\mu$m to obtain a negative electrode sheet consisting of the negative electrode collector and a negative electrode active material layer (slurry layer). A thickness of the negative electrode active material layer in the negative electrode sheet was approximately 300 $\mu$m.

2) Production of non-aqueous electrolytic solution secondary battery

A separator was placed on the negative electrode sheet obtained as described above, and then the positive electrode sheet obtained in [Production of positive electrode sheet] was placed thereon to form a laminate of negative electrode collector-negative electrode active material layer (slurry layer)-separator-positive electrode active material layer (slurry layer)-positive electrode collector. An aluminum tab was attached to an end part of the aluminum collector of the laminate and a nickel tab was attached to an end part of the copper collector by ultrasonic welding to obtain an electrode group. The electrode group was sandwiched between two aluminum laminate films, three sides were heat-sealed, and the remaining one side was vacuum-sealed to produce a laminated type non-aqueous electrolytic solution secondary battery (semi-solid state secondary battery).

[Method of evaluating shape stability during punching]

Each of the slurries for forming a positive electrode obtained as described above was applied onto one surface of a positive electrode collector (aluminum foil) having a thickness of 12 $\mu$m such that a width was 5 cm, a length was 8 cm, and a thickness was 350 $\mu$m, thereby obtaining a positive electrode sheet consisting of the positive electrode collector and a positive electrode active material layer (slurry layer).

A central portion of each of the positive electrode sheets obtained as described above was punched out with a punching machine (manufactured by NOGAMI R&D Co., Ltd., clearance: 1 $\mu$m) having a size of 2.5 cm square, and the collapsed (peeled) material which fell off during the punching was collected in an entire amount and the weight thereof was measured. The experiment was performed 10 times, and an average value of the 10 obtained measurement values was defined as the collapsed material weight. The obtained collapsed material weight was evaluated according to the following evaluation standard.

-Evaluation standard-

A: 10 mg or less
B: more than 10 mg and 50 mg or less
C: more than 50 mg and 100 mg or less
D: more than 100 mg and 150 mg or less
E: more than 150 mg and 200 mg or less
F: more than 200 mg

[Measuring method of volumetric energy density]

The positive electrode sheet used for preparing each of the non-aqueous electrolytic solution secondary batteries described above was punched out to have a diameter of 10 mm, the positive electrode collector was removed from the obtained punched-out piece, and a thickness of the positive electrode active material layer was measured. A thickness of the negative electrode active material layer was measured in the same manner. A thickness of power generation elements was obtained from the thickness of the positive electrode collector + the thickness of the positive electrode active material layer + the thickness of the separator + the thickness of the negative electrode active material layer + the thickness of the negative electrode collector. The thickness of each constitutional layer was measured using a constant pressure thickness measuring device (trade name: PG-20J, manufactured by TECLOCK Co., Ltd.). A volume (L) of the power generation elements was obtained by multiplying the above-described thickness of the power generation element by an area of a circular surface of the power generation element. Here, in the calculation of the volume (L) of the power generation elements, volume reduction due to the collapse of the end part due to the punching of the positive electrode sheet was not considered, and the ideal volume of the power generation elements was obtained.

Separately, a discharge capacity (Ah) for standard was measured by charging and discharging under the non-aqueous electrolytic solution secondary battery obtained as described above under the condition 1 described later, an average voltage (V) during discharge was measured, and an electric energy (Wh) was determined by the product of the discharge capacity (Ah) for standard × the average voltage (V).

A volumetric energy density of the power generation elements was calculated by dividing the electric energy (Wh) obtained as described above by the volume (L) of the non-aqueous electrolytic solution secondary battery obtained as described above. The obtained value was evaluated by applying the obtained value to the following evaluation standard.

-Evaluation standard-

A: 420 Wh/L or more

B: 410 Wh/L or more and less than 420 Wh/L

C: 400 Wh/L or more and less than 410 Wh/L

D: 380 Wh/L or more and less than 400 Wh/L

E: 360 Wh/L or more and less than 380 Wh/L

F: less than 360 Wh/L

<Condition 1. Charge and discharge conditions>

(Charging and discharging conditions of Experiment Nos. 1 to 12 (experiments using LFP as a positive electrode active material))
Constant current (CC)-constant voltage (CV) charging: current value of 15 mA, upper limit voltage value of 3.6 V, termination current value of 0.5 mA
CC discharging: current value of 15 mA, termination voltage value of 2.0 V
(Charging and discharging conditions of Experiment Nos. 13 to 24 (experiments using NMC as positive electrode active material))
CC-CV charging: current value of 15 mA, upper limit voltage value of 4.2 V, termination current value of 0.5 mA
CC discharging: current value of 15 mA, upper limit voltage value of 3.0 V

The obtained results are shown in Tables 2 and 3.

[Table 2-1]

| NO. | Remark | Large particle group A | | | | | Small particle group B | | | | | Difference in liquid absorption amount ηB - ηA | Maximum filling rate |
|---|---|---|---|---|---|---|---|---|---|---|---|---|---|
| | | Type of active material | D50 | Specific surface area | Liquid absorption amount ηA | Ratio (number frequency) | Type of active material | D50 | Specific surface area | Liquid absorption amount ηB | Ratio (number frequency) | | |
| | | | μm | m²/g | g/100 g | % | | μm | m²/g | g/100 g | % | g/100 g | % |
| 1 | Comparative Example | LFP1-1 | 8.6 | 8.1 | 30 | 100 | - | - | - | - | - | - | 65 |
| 2 | Example | LFP1-1 | 8.6 | 8.1 | 30 | 90 | LFP2-3 | 1.0 | 12.0 | 23 | 10 | 7 | 79 |
| 3 | Example | LFP1-1 | 8.6 | 8.1 | 30 | 70 | LFP2-3 | 1.0 | 12.0 | 23 | 30 | 7 | 83 |
| 4 | Comparative Example | LFP1-1 | 8.6 | 8.1 | 30 | *50* | LFP2-3 | 1.0 | 12.0 | 23 | 50 | 7 | 75 |
| *5* | Comparative Example | - | - | - | - | - | LFP2-3 | 1.0 | 12.0 | 23 | 100 | - | 66 |
| 6 | Example | LFP1-2 | 8.6 | 7.6 | 22 | 70 | LFP2-3 | 1.0 | 12.0 | 23 | 30 | 1 | 83 |
| 7 | Example | LFP1-3 | 8.6 | 6.6 | 5 | 70 | LFP2-3 | 1.0 | 12.0 | 23 | 30 | 18 | 83 |
| 8 | Example | LFP1-3 | 8.6 | 6.6 | 5 | 70 | LFP2-2 | 1.0 | 12.8 | 29 | 30 | 24 | 83 |
| 9 | Example | LFP1-3 | 8.6 | 6.6 | 5 | 70 | LFP2-4 | 1.0 | 11.0 | 19 | 30 | 14 | 83 |
| 10 | Example | LFP1-3 | 8.6 | 6.6 | 5 | 70 | LFP2-5 | 1.0 | 10.3 | 16 | 30 | 11 | 83 |
| 11 | Comparative Example | LFP1-1 | 8.6 | 8.1 | 30 | 70 | LFP2-1 | 1.0 | 13.4 | 42 | 30 | 12 | 83 |
| 12 | Comparative Example | LFP1-1 | 8.6 | 8.1 | 30 | 70 | LFP2-6 | 1.0 | 9.4 | 12 | 30 | 18 | 83 |

[Table 2-2]

| NO. | Remark | Large particle group A | | | | | Small particle group B | | | | | Difference in liquid absorption amount \|ηB - ηA\| | Maximum filling rate |
|---|---|---|---|---|---|---|---|---|---|---|---|---|---|
| | | Type of active material | D50 | Specific surface area | Liquid absorption amount ηA | Ratio (number frequency) | Type of active material | D50 | Specific surface area | Liquid absorption amount ηB | Ratio (number frequency) | | |
| | | | μm | m²/g | g/100 g | % | | μm | m²/g | g/100 g | % | g/100 g | % |
| 13 | Comparative Example | NMC1-1 | 12.0 | 7.2 | 27 | 100 | - | - | - | - | - | - | 63 |
| 14 | Example | NMC1-1 | 12.0 | 7.2 | 27 | 90 | NMC2-3 | 2.0 | 9.2 | 18 | 10 | 9 | 75 |
| 15 | Example | NMC1-1 | 12.0 | 7.2 | 27 | 70 | NMC2-3 | 2.0 | 9.2 | 18 | 30 | 9 | 81 |
| 16 | Comparative Example | NMC1-1 | 12.0 | 7.2 | 27 | 50 | NMC2-3 | 2.0 | 9.2 | 18 | 50 | 9 | 70 |
| 17 | Comparative Example | - | - | - | - | - | NMC2-3 | 2.0 | 9.2 | 18 | 100 | - | 65 |
| 18 | Example | NMC1-2 | 12.0 | 6.8 | 22 | 70 | NMC2-3 | 2.0 | 9.2 | 18 | 30 | 4 | 81 |
| 19 | Example | NMC1-3 | 12.0 | 5.4 | 5 | 70 | NMC2-3 | 2.0 | 9.2 | 18 | 30 | 13 | 81 |
| 20 | Example | NMC1-3 | 12.0 | 5.4 | 5 | 70 | NMC2-2 | 2.0 | 10.2 | 26 | 30 | 21 | 81 |
| 21 | Example | NMC1-3 | 12.0 | 5.4 | 5 | 70 | NMC2-4 | 2.0 | 8.2 | 17 | 30 | 12 | 81 |
| 22 | Example | NMC1-3 | 12.0 | 5.4 | 5 | 70 | NMC2-5 | 2.0 | 10.3 | 16 | 30 | 11 | 81 |
| 23 | Comparative Example | NMC1-1 | 12.0 | 7.2 | 27 | 70 | NMC2-1 | 2.0 | 11.0 | 34 | 30 | 7 | 81 |
| 24 | Comparative Example | NMC1-1 | 12.0 | 7.2 | 27 | 70 | NMC2-6 | 2.0 | 7.3 | 8 | 30 | 19 | 81 |

[Table 3]

| NO. | Remark | Positive electrode active material layer Film thickness μm | Shape stability | Battery performance Energy density |
|---|---|---|---|---|
| 1 | Comparative Example | 350 | F | F |
| 2 | Example | 350 | D | D |
| 3 | Example | 350 | C | C |
| 4 | Comparative Example | 350 | F | F |
| 5 | Comparative Example | 350 | F | F |
| 6 | Example | 350 | B | B |
| 7 | Example | 350 | A | A |
| 8 | Example | 350 | B | B |
| 9 | Example | 350 | A | A |
| 10 | Example | 350 | B | B |
| 11 | Comparative Example | 350 | F | F |
| 12 | Comparative Example | 350 | F | F |

| NO. | Remark | Positive electrode active material layer Film thickness μm | Shape stability | Battery performance Energy density |
|---|---|---|---|---|
| 13 | Comparative Example | 350 | F | F |
| 14 | Example | 350 | D | D |
| 15 | Example | 350 | C | C |
| 16 | Comparative Example | 350 | F | F |
| 17 | Comparative Example | 350 | F | F |
| 18 | Example | 350 | A | A |
| 19 | Example | 350 | A | A |
| 20 | Example | 350 | B | B |
| 21 | Example | 350 | B | B |
| 22 | Example | 350 | B | B |
| 23 | Comparative Example | 350 | F | F |
| 24 | Comparative Example | 350 | F | F |

(Note to Table 2)

For convenience, items (median diameters) related to the "large particle group a" are also described in the column of "Large particle group A". Similarly, items related to the "small particle group b" are also described in the column of "Small particle group B".

"-" indicates that the component was not used.

As shown in Tables 2 and 3, in a case where the slurry for forming a positive electrode did not contain the large particle group A and the small particle group B at the frequency defined in the present invention (Experiment Nos. 1, 4, 5, 13, 16, and 17) and in a case where the liquid absorption amount $\eta B$ of the dispersion medium of the small particle group B did not satisfy the expression B1: $15 \leq \eta B \leq 30$ (Experiment Nos. 11, 12, 23, and 24), the end part of the positive electrode active material was likely to collapse in the positive electrode sheet, and thus the shape stability was deteriorated. In addition, the non-aqueous electrolytic solution secondary battery including the positive electrode sheet as the positive electrode had a deteriorated battery capacity (energy density).

On the other hand, in a case where the slurry for forming a positive electrode contained the large particle group A and the small particle group B at the frequency defined in the present invention and the liquid absorption amount $\eta B$ of the dispersion medium of the small particle group B satisfied the expression B1: $15 \leq nB \leq 30$ (Experiment Nos. 2, 3, 6 to 10, 14, 15, and 18 to 22), even in a case where a positive electrode active material layer having a thickness of 350 $\mu$m was formed, the collapse of the end part of the positive electrode active material was suppressed in the obtained positive electrode sheet, and thus the shape stability was excellent. In addition, the non-aqueous electrolytic solution secondary battery including the positive electrode sheet as the positive electrode had an improved battery capacity.

The present invention has been described with the embodiments thereof, any details of the description of the present invention are not limited unless otherwise specified, and it is obvious that the present invention is widely construed without departing from the gist and scope of the present invention described in the accompanying claims.

The present application claims the priority of JP2023-90455 filed in Japan on May 31, 2023, the contents of which are incorporated herein by reference, as a part of the description of the present specification.

Explanation of References

10: non-aqueous electrolytic solution secondary battery
1: negative electrode collector
2: negative electrode active material layer
3: separator
4: positive electrode active material layer
5: positive electrode collector
6: operation portion (light bulb)

**Claims**

1. A slurry for forming a positive electrode of a non-aqueous electrolytic solution secondary battery, comprising:

   a positive electrode active material;
   an electrolyte; and
   a dispersion medium,
   wherein the positive electrode active material consists of a large particle group A having a particle diameter of 5.0 $\mu$m or more and a small particle group B having a particle diameter of less than 5.0 $\mu$m,
   in a number-based particle size distribution of the positive electrode active material, in a case where a total frequency is set to 100%, a frequency of the large particle group A is 60% or more and a frequency of the small particle group B is 40% or less, and
   a liquid absorption amount $\eta B$ (g/100 g) of the dispersion medium per 100 g of the small particle group B satisfies the following expression B1,

$$\text{the expression B1: } 15 \leq \eta B \leq 30.$$

2. The slurry for forming a positive electrode according to claim 1,
   wherein a liquid absorption amount $\eta A$ (g/100 g) of the dispersion medium per 100 g of the large particle group A satisfies the following expression A1,

$$\text{the expression A1: } 2 \leq \eta A \leq 25.$$

3. The slurry for forming a positive electrode according to claim 2,
   wherein the liquid absorption amount $\eta A$ satisfies the following expression A2,

$$\text{the expression A2: } 2 \leq \eta A \leq 7.$$

**4.** The slurry for forming a positive electrode according to claim 3,
wherein the liquid absorption amount $\eta B$ satisfies the following expression B2,

$$\text{the expression B2: } 18 \leq \eta B \leq 25.$$

**5.** The slurry for forming a positive electrode according to claim 4,
wherein a maximum filling rate calculated from a volume-based cumulative particle size distribution of the positive electrode active material is 80% or more.

**6.** A positive electrode sheet comprising:
a positive electrode active material layer formed of the slurry for forming a positive electrode according to any one of claims 1 to 5.

**7.** A non-aqueous electrolytic solution secondary battery comprising:
the positive electrode sheet according to claim 6 as a positive electrode.

FIG. 1

## INTERNATIONAL SEARCH REPORT

| International application No. |
| --- |
| **PCT/JP2024/018888** |

### A. CLASSIFICATION OF SUBJECT MATTER

*H01M 4/139*(2010.01)i; *H01M 4/13*(2010.01)i; *H01M 4/36*(2006.01)i
FI: H01M4/139; H01M4/36 D; H01M4/13

According to International Patent Classification (IPC) or to both national classification and IPC

### B. FIELDS SEARCHED

Minimum documentation searched (classification system followed by classification symbols)

H01M4/139; H01M4/13; H01M4/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2022-120400 A (PRIME PLANET ENERGY & SOLUTIONS INC.) 18 August 2022 (2022-08-18)<br>entire text | 1-7 |
| A | JP 2023-034700 A (PRIME PLANET ENERGY & SOLUTIONS INC.) 13 March 2023 (2023-03-13)<br>entire text | 1-7 |
| A | JP 2019-029212 A (TOYOTA JIDOSHA KABUSHIKI KAISHA) 21 February 2019 (2019-02-21)<br>entire text | 1-7 |
| A | JP 2023-034701 A (PRIME PLANET ENERGY & SOLUTIONS INC.) 13 March 2023 (2023-03-13)<br>entire text | 1-7 |

☐ Further documents are listed in the continuation of Box C.  ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 July 2024** | **06 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/018888**

| Patent document cited in search report | | | Publication date (day/month/year) | Patent family member(s) | | | Publication date (day/month/year) |
|---|---|---|---|---|---|---|---|
| JP | 2022-120400 | A | 18 August 2022 | US 2022/0255065 entire text CN 114883518 entire text | A1 A | |
| JP | 2023-034700 | A | 13 March 2023 | US 2023/0081761 entire text EP 4141993 entire text CN 115732651 entire text KR 10-2023-0032919 entire text | A1 A1 A A | |
| JP | 2019-029212 | A | 21 February 2019 | US 2019/0036110 entire text CN 109326793 entire text KR 10-2019-0013656 entire text | A1 A A | |
| JP | 2023-034701 | A | 13 March 2023 | US 2023/0080226 entire text EP 4141986 entire text CN 115732673 entire text KR 10-2023-0032918 entire text | A1 A1 A A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017147222 A
- JP 2015230748 A
- WO 2018155314 A
- JP 2023034700 A
- JP 2019029212 A

- JP 2016201308 A
- JP 2005108835 A
- JP 2012185938 A
- WO 2018135395 A
- JP 2023090455 A

**Non-patent literature cited in the description**

- Department of Chemical Engineering. **DR. MICHI-TAKA SUZUKI** ; **PROFESSOR EMERITUS**. Graduate School of Engineering. University of Hyogo